# EUROPÄISCHE PATENTSCHRIFT

(11) **EP 3 578 778 B1**
(45) Veröffentlichungstag und Bekanntmachung des Hinweises auf die Patenterteilung: **06.01.2021**
(21) Anmeldenummer: 19173035.7
(22) Anmeldetag: 07.05.2019
(51) Int. Cl.: F02B 69/00, F02B 61/04

(54) **SCHIFFSBRENNKRAFTMASCHINE**
MARINE COMBUSTION ENGINE
MOTEUR À COMBUSTION INTERNE DE BATEAU

(30) Priorität: 05.06.2018 DE 102018113354
(43) Veröffentlichungstag der Anmeldung: 11.12.2019
(73) Patentinhaber: MAN Energy Solutions SE, 86153 Augsburg (DE)
(72) Erfinder: Hollstein, Rony, 86551 Aichach (DE); Rubner, Stefan, 86343 Königsbrunn (DE)

(56) Entgegenhaltungen:
- DE-A1- 19 831 046
- JP-A- S60 201 023
- US-A- 1 940 427
- US-A- 3 418 993

## Beschreibung

Die Erfindung betrifft eine Schiffsbrennkraftmaschine.

Schiffsbrennkraftmaschinen verfügen über ein Kurbelgehäuse sowie über eine in dem Kurbelgehäuse gelagerte Kurbelwelle. Ferner verfügen Schiffsbrennkraftmaschinen über einen Kurbelwellenschwingungsdämpfer sowie ein abtriebsseitiges Schwungrad, die beide an die Kurbelwelle gekoppelt sind. Ferner verfügt eine Schiffsbrennkraftmaschine über eine Turboladereinheit und eine Ölwanne. Die Turboladereinheit ist an einer Seite des Kurbelgehäuses oberhalb des Kurbelgehäuses angeordnet und greift dabei typischerweise an einer Oberseite des Kurbelgehäuses an, nämlich an einer sogenannten Schulterfläche. Die Turboladereinheit weist einen Abgasaustritt auf. Die Ölwanne ist unterhalb des Kurbelgehäuses angeordnet.

Eine Schiffsbrennkraftmaschine benötigt eine gewisse Flexibilität hinsichtlich der Position des Abgasaustritts der Turboladereinheit. So kann es erforderlich sein, den Abgasaustritt entweder mit einem Schornstein zu koppeln, der auf einer Abtriebsseite der Brennkraftmaschine oder auf einer der Abtriebsseite gegenüberliegenden Seite der Brennkraftmaschine positioniert ist. Aus der Praxis bekannte Schiffsbrennkraftmaschinen können diese Flexibilität nur durch eine entsprechende konstruktive Gestaltung von Kurbelgehäuse und Turboladereinheit gewährleisten. Dies ist von Nachteil, da dann abhängig davon, an welcher Seite der Brennkraftmaschine ein Abgasschornstein positioniert ist, unterschiedliche konstruktive Gestaltungen von Kurbelgehäuse und Turboladereinheit bereitgehalten werden müssen.

Es besteht Bedarf an einer Schiffsbrennkraftmaschine, die bei geringerer Varianz der Baugruppen der Schiffsbrennkraftmaschine eine Flexibilität hinsichtlich der Anordnung des Abgasaustritts in Bezug auf einen Abgasschornstein ermöglicht.

Hiervon ausgehend liegt der vorliegenden Erfindung die Aufgabe zugrunde, eine neuartige Schiffsbrennkraftmaschine zu schaffen. Diese Aufgabe wird durch eine Schiffsbrennkraftmaschine nach Anspruch 1 gelöst. Erfindungsgemäß ragt die Kurbelwelle an einer ersten Seite des Kurbelgehäuses, die quer zur Kurbelwelle verläuft und an welcher die Turboladereinheit positioniert ist, mit einem ersten Abschnitt und an einer der ersten Seite des Kurbelgehäuses und damit der Turboladereinheit gegenüberliegenden zweiten Seite des Kurbelgehäuses, die ebenfalls quer zur Kurbelwelle verläuft, mit einem zweiten Abschnitt aus dem Kurbelgehäuse heraus. Zur Anpassung der Position des Abgasaustritts ist die Gesamtheit aus den Baugruppen Kurbelgehäuse, Kurbelwelle und Turboladereinheit bei unveränderte Relativposition dieser Baugruppen untereinander um eine Vertikalachse um 180° drehbar und abhängig hiervon der Kurbelwellenschwingungsdämpfer an den ersten Abschnitt der Kurbelwelle und das Schwungrad an den zweiten Abschnitt der Kurbelwelle oder alternativ der Kurbelwellenschwingungsdämpfer an den zweiten Abschnitt der Kurbelwelle und das Schwungrad an den ersten Abschnitt der Kurbelwelle angebunden. Bei der erfindungsgemäßen Schiffsbrennkraftmaschine kann die Gesamtheit aus Kurbelgehäuse, Kurbelwelle und Turboladereinheit bei unveränderter konstruktiver Ausführung derselben und bei unveränderter Relativposition derselben um die Vertikalachse um 180° gedreht werden, um durch Veränderung der Ausrichtung der Turboladereinheit auch die Ausrichtung des Abgasaustritts anzupassen. Es ist lediglich erforderlich, die Position von Schwungrad und Kurbelwellenschwingungsdämpfer zu vertauschen, und zwar dadurch, dass abhängig von der gewählten Position des Abgasaustritts entweder auf der Abtriebsseite oder auf der der Abtriebsseite gegenüberliegenden Seite der Brennkraftmaschine der Kurbelwellenschwingungsdämpfer und das Schwungrad an den entsprechenden Abschnitten der Kurbelwelle montiert werden.

Dann, wenn der Abgasaustritt der Turboladereinheit auf einer Abtriebsseite anzuordnen ist, ist die Gesamtheit aus den Baugruppen Kurbelgehäuse, Kurbelwelle und Turboladereinheit derart gedreht, dass die Turboladereinheit auf der Abtriebsseite positioniert ist, wobei dann der Kurbelwellenschwingungsdämpfer an den zweiten Abschnitt der Kurbelwelle und das Schwungrad an den ersten Abschnitt der Kurbelwelle angebunden ist. Dann, wenn der Abgasaustritt auf einer der Abtriebsseite gegenüberliegenden Seite anzuordnen ist, ist die Gesamtheit aus den Baugruppen Kurbelgehäuse, Kurbelwelle und Turboladereinheit derart gedreht, dass die Turboladereinheit gegenüberliegend zu der Abtriebsseite positioniert ist, wobei dann der Kurbelwellenschwingungsdämpfer an den ersten Abschnitt der Kurbelwelle und das Schwungrad an den zweiten Abschnitt der Kurbelwelle angebunden ist. Dies ermöglicht es, bei unveränderter konstruktiver Ausführung von Kurbelwelle, Kurbelgehäuse, Ölwanne und Turboladereinheit das Schwungrad sowie den Kurbelwellenschwingungsdämpfer abhängig von der gewählten Position des Abgasaustritts mit den entsprechenden Abschnitten der Kurbelwelle zu verbinden.

Nach einer vorteilhaften Weiterbildung weist die Schiffsbrennkraftmaschine eine Haube für den Kurbelwellenschwingungsdämpfer auf, die dann, wenn der Abgasaustritt auf der Abtriebsseite anzuordnen ist, den Kurbelwellenschwingungsdämpfer an der zweiten Seite des Kurbelgehäuses abdeckt und Öl an der zweiten Seite des Kurbelgehäuses in die Ölwanne führt, und die dann, wenn der Abgasaustritt gegenüberliegend zu der Abtriebsseite anzuordnen ist, den Kurbelwellenschwingungsdämpfer an der ersten Seite des Kurbelgehäuses abdeckt und Öl an der ersten Seite des Kurbelgehäuses in die Ölwanne führt. Durch die Haube ist es möglich, abhängig von der Position des Abgasaustritts sowie abhängig von der Anbindung des Kurbelwellenschwingungsdämpfers an den jeweiligen Abschnitt der Kurbelwellen den Kurbelwellenschwingungsdämpfer abzudecken und Öl definiert in die Ölwanne zurückzuführen. Abhängig von der Position des Abgasaustritts und demnach abhängig von der Anbindung des Kurbelwellenschwingungsdämpfers an den jeweiligen Abschnitt der Kurbelwelle verändert auch die Haube ihre Position.

Nach einer vorteilhaften Weiterbildung weist die Schiffsbrennkraftmaschine eine Ölpumpe, einen Ölkühler, eine Kühlmittelpumpe und eine Kraftstoffzuführung auf, die parallel versetzt zur Kurbelwelle am Kurbelgehäuse verbaut sind und zusammen mit der Gesamtheit aus Kurbelgehäuse, Kurbelwelle und Turboladereinheit bei unveränderter Relativposition dieser Baugruppen um die Vertikalachse um 180° drehbar sind. Dann, wenn Ölpumpe, Ölkühler, Kühlmittelpumpe und Kraftstoffführung seitlich, parallel versetzt zur Kurbelwelle an der Schiffsbrennkraftmaschine bzw. am Kurbelgehäuse verbaut sind, können dieselben zusammen mit der Gesamtheit aus Kurbelgehäuse, Kurbelwelle und Turboladereinheit um die Vertikalachse um 180° gedreht werden, ohne dass die Relativposition derselben geändert werden müsste oder dieselben eine bauliche Varianz aufweisen müssten. Parallel versetzt zur Kurbelwelle bedeutet in Radialrichtung der Kurbelwelle zu derselben versetzt, sodass die versetzte Baugruppe nicht in einer Flucht mit der Kurbelwelle steht.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: ein schematische Draufsicht auf eine erfindungsgemäße Schiffsbrennkraftmaschine in einer Ausrichtung mit einer Position eines Abgasaustritts auf einer Abtriebsseite,
- Fig. 2:: eine Seitenansicht der Fig. 1,
- Fig. 3:: ein schematische Draufsicht auf eine erfindungsgemäße Schiffsbrennkraftmaschine in einer Ausrichtung mit einer Position eines Abgasaustritts auf einer der Abtriebsseite gegenüberliegenden Seite, und
- Fig. 4:: eine Seitenansicht der Fig. 3.

Die Erfindung betrifft eine Schiffsbrennkraftmaschine.

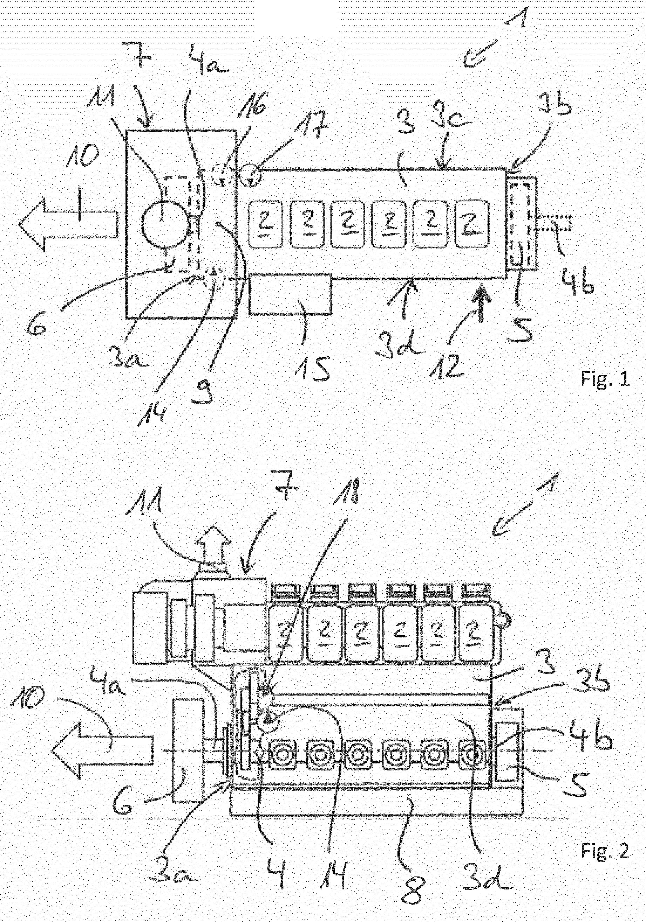

Fig. 1 und 2 zeigen ein Ausführungsbeispiel einer erfindungsgemäßen Brennkraftmaschine 1 mit mehreren Zylindern 2, wobei die Brennkraftmaschine 1 ein Kurbelgehäuse 3, eine im Kurbelgehäuse 3 drehbar gelagerte Kurbelwelle 4, einen an der Kurbelwelle 4 angreifenden Kurbelwellenschwingungsdämpfer 5, einen ebenfalls an der Kurbelwelle 4 angreifendes antriebsseitiges Schwungrad 6, eine Turboladereinheit 7 sowie eine Ölwanne 8 aufweist.

Die Turboladereinheit 7 ist an einer Seite 3a des Kurbelgehäuses 3 angeordnet, die sich quer zur Kurbelwelle 4 erstreckt, nämlich oberhalb des Kurbelgehäuses 3, wobei an dieser Seite 3a des Kurbelgehäuses 3 die Turboladereinheit 7 an einer Schulterfläche 9 des Kurbelgehäuses 3 angreift. Die Ölwanne 8 ist unterhalb des Kurbelgehäuses 3 angeordnet. Fig. 1 und 2 zeigen weiterhin die Position eines Abtriebs 10 des Schiffs, auf dem die Schiffsbrennkraftmaschine 1 verbaut ist, wobei es sich bei diesem Abtrieb 10 insbesondere um einen Schiffspropeller oder Generator handelt.

Ferner zeigt Fig. 1 und 2 einen Abgasaustritt 11 der Turboladereinheit 7. Abgas, welches über im Detail nicht gezeigte Turbinen der Abgasturboladereinheit 7 geführt wurde, kann die Turboladereinheit 7 über den Abgasaustritt 11 verlassen und in einen im Detail nicht gezeigten Abgaskamin- oder Schornstein eintreten.

Die Kurbelwelle 4 ragt an der ersten Seite 3a des Kurbelgehäuses 3 mit einem ersten Abschnitt 4a aus dem Kurbelgehäuse 3 heraus. An einer gegenüberliegenden Seite 3b des Kurbelgehäuses 3, die sich auch quer zur Kurbelwelle 4 erstreckt, ragt die Kurbelwelle 4 mit einem zweiten Abschnitt 4b aus dem Kurbelgehäuse 3 heraus. Der Abschnitt 4a, der an der ersten Seite 3a des Kurbelgehäuses 3 aus dem Kurbelgehäuse 3 herausragt, erstreckt sich unterhalb der Turboladereinheit 7. Der zweite Abschnitt 4b der Kurbelwelle 4 ragt an dem der Turboladereinheit 7 gegenüberliegenden Seite 3b aus dem Kurbelgehäuse 3 heraus.

Fig. 1 und 2 zeigen eine Ausrichtung der Schiffsbrennkraftmaschine 1, in welcher der Abgasaustritt 11 der Turboladereinheit 7 abtriebsseitig ausgerichtet ist, sodass dann das Schwungrad 6 mit dem ersten Abschnitt 4a der Kurbelwelle 4 gekoppelt ist, der an der ersten Seite 3a des Kurbelgehäuses 3 aus dem Kurbelgehäuse 3 herausragt, wobei der Kurbelwellenschwingungsdämpfer 5 an der zweiten Seite 3b des Kurbelgehäuses 3 mit dem an der zweiten Seite 3b herausragenden zweiten Abschnitt 4b der Kurbelwelle 4 verbunden ist, welcher auf der der Turboladereinheit 7 gegenüberliegenden Seite 3b des Kurbelgehäuses 3 positioniert ist.

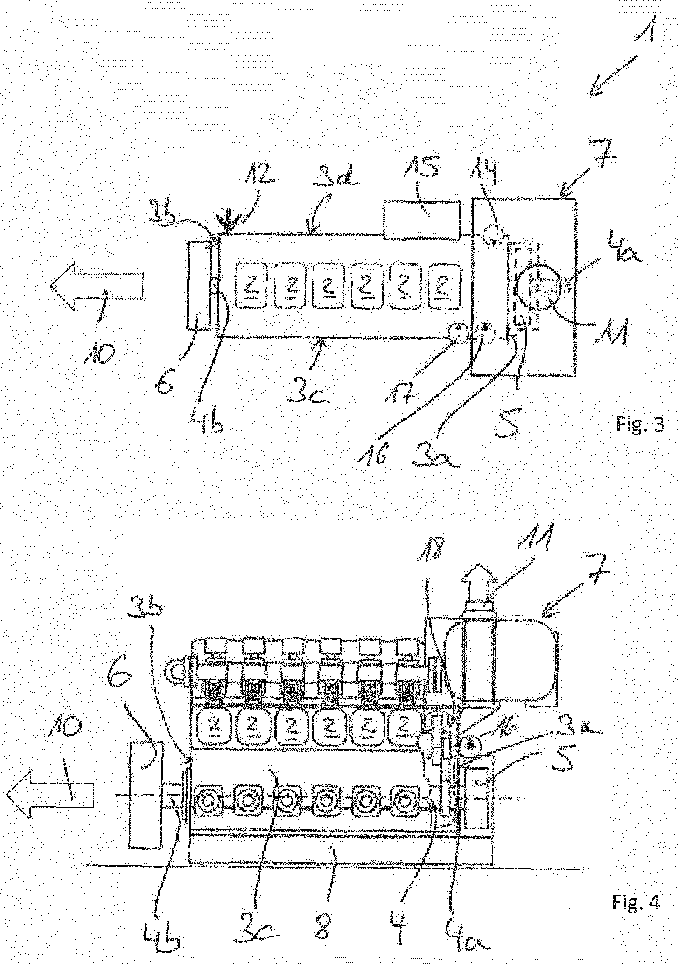

Fig. 3 und 4 zeigen eine Ausrichtung der erfindungsgemäßen Brennkraftmaschine 1 für den Fall, in welchem der Abgasaustritt 11 der Turboladereinheit 7 mit einem Abgaskamin bzw. Abgasschornstein zu koppeln ist, der nicht auf der Abtriebsseite der Brennkraftmaschine positioniert ist, sondern vielmehr auf der dem Abtrieb 10 gegenüberliegenden Seite der Brennkraftmaschine, wobei dann die Gesamtheit der Baugruppen Kurbelgehäuse 3, Kurbelwelle 4 und Turboladereinheit 7 bei vorzugsweise feststehender Ölwanne 8 um eine Vertikalachse um 180° gedreht ist, und zwar ohne Veränderung der Relativposition dieser Baugruppen 3, 4, 7 zueinander sowie ohne die Notwendigkeit einer baulichen Varianz für diese Baugruppen 3, 4, 7.

Um die Brennkraftmaschine 1 dahingehend anzupassen, dass der Abgasaustritt 11 der Turboladereinheit 7 auf die dem Abtrieb 10 gegenüberliegende Seite verlagerbar ist, muss lediglich die Gesamtheit aus Kurbelgehäuse 3, Kurbelwelle 4 unf Turboladereinheit 7 um 180° gedreht werden, ferner tauschen Schwungrad 6 und Schwingungsdämpfer 5 ihre Position, sodass in Fig. 2 der Schwingungsdämpfer 5 der Kurbelwelle 4 nunmehr am ersten Abschnitt 4a der Kurbelwelle 4 montiert ist und das Schwungrad 6 am zweiten Abschnitt 4b der Kurbelwelle 4 montiert ist. Es müssen demnach lediglich Kurbelwellenschwingungsdämpfer 5 und Schwungrad 6 ihre Position bzw. Montageposition an den Abschnitten 4a, 4b der Kurbelwelle 4 tauschen.

Während also in der Konfiguration der Fig. 1 und 2 das Schwungrad 6 mit dem Abschnitt 4a der Kurbelwelle 4, der unterhalb der Turboladereinheit 7 positioniert ist, gekoppelt ist, ist in der Konfiguration der Fig. 3 und 4 nunmehr der Schwingungsdämpfer 5 an dem Abschnitt 4a der Kurbelwelle 4 montiert. Darüber hinaus ist in Fig. 1 und 2 der Schwingungsdämpfer 5 mit dem zweiten Abschnitt 4b der Kurbelwelle 4 gekoppelt, der an der der Turboladereinheit 7 gegenüberliegenden Seite 3b des Kurbelgehäuses 3 aus demselben herausragt, wohingegen in der Konfiguration der Fig. 3 und 4 an diesem Abschnitt 4b der Kurbelwelle 4 das Schwungrad 6 angebunden ist.

Bei der erfindungsgemäßen Brennkraftmaschine 1 ist weiterhin eine Haube 13 für den Kurbelwellenschwingungsdämpfer 5 vorgesehen, welcher den Kurbelwellenschwingungsdämpfer 5 abdeckt und mit der Ölwanne 8 zusammenwirkt. In der Konfiguration der Fig. 1 und 2 ist die Haube 13 zusammen mit dem Kurbelwellenschwingungsdämpfer 5 auf der der Turboladereinheit 7 gegenüberliegenden Seite 3b des Kurbelgehäuses 3 montiert und führt an dieser Seite Öl ausgehend vom Kurbelwellenschwingungsdämpfer 5 zurück in die Ölwanne 8. In der Konfiguration der Fig. 3 und 4 hingegen ist die Haube 13 zusammen mit dem Kurbelwellenschwingungsdämpfer 5 an der ersten Seite 3a des Kurbelgehäuses 3 montiert, und zwar an derjenigen Seite, an welcher die Turboladereinheit 7 montiert ist, wobei dann die Haube 13 Öl an dieser Seite 3a des Kurbelgehäuses 3 in die Ölwanne 8 zurückführt.

Die Ölwanne 8 hält demnach eine entsprechende Schnittstelle für die Haube 13 bereit, um abhängig von der Konfiguration der Schiffsbrennkraftmaschine 1, also abhängig davon, wo der Abgasaustritt 11 bezogen auf den Abtrieb 10 positioniert ist, Öl vom Kurbelwellenschwingungsdämpfer 5 zurück in die Ölwanne 8 zu führen. Die Haube 13 kann an beiden Seiten 3a, 3b mit dem Kurbelgehäuses 3 verbunden werden.

Die Schiffsbrennkraftmaschine 1 verfügt weiterhin über eine Ölpumpe 14, über einen Ölkühler 15, über Kühlmittelpumpen 16, 17 sowie über einen Kraftstoffanschluss 12. Diese Baugruppen, also die Ölpumpe 14, der Ölkühler 15, die Kühlpumpen 16, 17 sowie Kraftstoffzuführung 12 sind dabei jeweils an einer sich parallel zur Kurbelwelle 4 erstreckenden Seite 3c, 3d am Kurbelgehäuse 3 verbaut. So zeigen Fig. 1 bis 4, dass die Ölpumpe 14, der Ölkühler 15 sowie die Kraftstoffzuführung 12 gemeinsam an einer Seite 3d sowie die Kühlmittelpumpen 16, 17 gemeinsam an einer gegenüberliegenden Seite 3c des Kurbelgehäuses 3 verbaut sind. Diese Baugruppen 14, 15, 16, 17 und 12 stehen demnach nicht in einer axialen Flucht mit der Kurbelwelle 4, sind also gegenüber der Kurbelwelle 4 parallel oder in Radialrichtung der Kurbelwelle 4 gesehen versetzt, sodass bei Drehen der Gesamtheit aus Kurbelgehäuse 3, Kurbelwelle 4 und Turboladereinheit 7 auch die Baugruppen 14, 15, 16, 17 und 12 ohne Veränderung ihrer Relativposition sowie ohne die Notwendigkeit einer baulichen Varianz mitgedreht werden können, nämlich zusammen mit den Baugruppen 3, 4, 7 um die Vertikalachse um 180°. Zum Antrieb der Ölpumpe 14 sowie der Kühlmittelpumpen 16, 17 dient ein Zahnradantrieb 18, der seitlich am Kurbelgehäuse 3 parallel versetzt zur Kurbelwelle 4 verbaut ist und die Pumpen 14, 16 und 17, ausgehend von einem Steuerantrieb oder ausgehend von der Kurbelwelle 4 antreibt.

Die erfindungsgemäße Brennkraftmaschine kann dahingehend angepasst werden, wo in Bezug auf den Abtrieb 10 der Abgasaustritt 11 der Turboladerbaugruppe 7 zu positionieren ist. Hierzu muss lediglich die Gesamtheit aus Kurbelgehäuse 3, Kurbelwelle 4 und Turboladereinheit 7sowie Baugruppen 12, 14, 15, 16, 17 und 18 um 180° um eine Vertikalachse gedreht werden. Lediglich Kurbelwellenschwingungsdämpfer 5 und Schwungrad 6 sowie Haube 13 müssen ihre Montageposition an der Kurbelwelle 4 bzw. am Kurbelwellengehäuse 3 ändern. Es ist nicht erforderlich, die Turboladerbaugruppe 7 in ihrer Montageposition zum Kurbelgehäuse 3 zu ändern. Demnach muss nur eine Schulterfläche 9 für den Anbau der Turboladereinheit 7 am Kurbelgehäuse 4 bereitgehalten werden, wodurch das Kurbelgehäuse 3 entsprechend kürzer ausgeführt werden kann.

### Bezugszeichenliste

- 1: Schiffsbrennkraftmaschine
- 2: Zylinder
- 3: Kurbelgehäuse
- 3a: Seite
- 3b: Seite
- 3c: Seite
- 3d: Seite
- 4: Kurbelwelle
- 4a: Abschnitt
- 4b: Abschnitt
- 5: Kurbelwellenschwingungsdämpfer
- 6: Schwungrad
- 7: Turboladereinheit
- 8: Ölwanne
- 9: Schulterfläche
- 10: Abtrieb
- 11: Abgasaustritt
- 12: Kraftstoffeinlass
- 13: Haube
- 14: Ölpumpe
- 15: Ölkühler
- 16: Kühlpumpe
- 17: Kühlpumpe
- 18: Zahnradantrieb

## Patentansprüche

1. Schiffsbrennkraftmaschine (1),
mit einem Kurbelgehäuse (3),
mit einer in dem Kurbelgehäuse (3) gelagerten Kurbelwelle (4),
mit einem an die Kurbelwelle (4) gekoppelten Kurbelwellenschwingungsdämpfer (5),
mit einem an die Kurbelwelle (4) gekoppelten, abtriebsseitigen Schwungrad (6),
mit einer Turboladereinheit (7), die an einer sich quer zur Kurbelwelle (4) erstreckenden Seite (3a) des Kurbelgehäuses (3) oberhalb des Kurbelgehäuses (3) angeordnet ist, wobei die Turboladereinheit (7) einen Abgasaustritt (11) aufweist,
**dadurch gekennzeichnet, dass**
die Kurbelwelle (4) an der ersten Seite (3a) des Kurbelgehäuses (3), an welcher die Turboladereinheit (7) positioniert ist, mit einem ersten Abschnitt (4a) und an einer der ersten Seite (3a) und damit der Turboladereinheit (7) gegenüberliegenden zweiten, sich quer zu Kurbelwelle (4) erstreckenden Seite (3b) des Kurbelgehäuses (3) mit einem zweiten Abschnitt (4b) aus dem Kurbelgehäuse (3) herausragt,
zur Anpassung der Position des Abgasaustritts (11) die Gesamtheit aus den Baugruppen Kurbelgehäuse (3), Kurbelwelle (4) und Turboladereinheit (7) bei unveränderte Relativposition dieser Baugruppen untereinander um eine Vertikalachse um 180° drehbar ist, wobei abhängig hiervon der Kurbelwellenschwingungsdämpfer (5) an den ersten Abschnitt (4a) der Kurbelwelle (4) und das Schwungrad (6) an den zweiten Abschnitt (4b) der Kurbelwelle (4) oder alternativ der Kurbelwellenschwingungsdämpfer (5) an den zweiten Abschnitt (4b) der Kurbelwelle und das Schwungrad (6) an den ersten Abschnitt (4a) der Kurbelwelle (4) angebunden ist.

2. Schiffsbrennkraftmaschine nach Anspruch 1, **dadurch gekennzeichnet, dass** dann, wenn der Abgasaustritt (11) der Turboladereinheit (7) auf einer Abtriebsseite anzuordnen ist, die Gesamtheit aus den Baugruppen Kurbelgehäuse (3), Kurbelwelle (4) und Turboladereinheit (7) derart gedreht ist, dass die Turboladereinheit (7) auf der Abtriebsseite positioniert ist, wobei dann der Kurbelwellenschwingungsdämpfer (5) an den zweiten Abschnitt (4b) der Kurbelwelle und das Schwungrad (6) an den ersten Abschnitt (4a) der Kurbelwelle angebunden ist.

3. Schiffsbrennkraftmaschine nach Anspruch 1 oder 2, **dadurch gekennzeichnet, dass** dann, wenn der Abgasaustritt (11) auf einer der Abtriebsseite gegenüberliegenden Seite anzuordnen ist, die Gesamtheit aus den Baugruppen Kurbelgehäuse (3), Kurbelwelle (4) und Turboladereinheit (7) derart gedreht ist, dass die Turboladereinheit (7) gegenüberliegend zu der Abtriebsseite positioniert ist, wobei dann der Kurbelwellenschwingungsdämpfer (5) an den ersten Abschnitt (4a) der Kurbelwelle und das Schwungrad (6) an den zweiten Abschnitt (4b) der Kurbelwelle angebunden ist.

4. Schiffsbrennkraftmaschine nach einem der Ansprüche 1 bis 3, **gekennzeichnet durch** eine Haube (13) für den Kurbelwellenschwingungsdämpfer (5), die dann, wenn der Abgasaustritt (11) auf der Abtriebsseite anzuordnen ist, den Kurbelwellenschwingungsdämpfer (5) an der zweiten Seite (3b) des Kurbelgehäuses (3) abdeckt und Öl an der zweiten Seite (3b) des Kurbelgehäuses in eine Ölwanne (8) führt, und die dann, wenn der Abgasaustritt (11) gegenüberliegend zu der Abtriebsseite anzuordnen ist, den Kurbelwellenschwingungsdämpfer (5) an der ersten Seite (3a) des Kurbelgehäuses abdeckt und Öl an der ersten Seite (3a) des Kurbelgehäuses in eine Ölwanne (8) führt.

5. Schiffsbrennkraftmaschine nach einem der Ansprüche 1 bis 4, **gekennzeichnet durch** eine Ölpumpe (14) und eine Kühlmittelpumpe (16, 17), die versetzt zur Kurbelwelle (4) am Kurbelgehäuse (3) verbaut sind und zusammen mit der Gesamtheit aus Kurbelgehäuse (3), Kurbelwelle (4) und Turboladereinheit (7) bei unveränderter Relativposition dieser Baugruppen untereinander um die Vertikalachse um 180° drehbar sind.

6. Schiffsbrennkraftmaschine nach Anspruch 5, **gekennzeichnet durch** einen Ölkühler (15), der ebenfalls versetzt zur Kurbelwelle (4) am Kurbelgehäuse (3) verbaut ist und ebenfalls zusammen mit der Gesamtheit aus Kurbelgehäuse (3), Kurbelwelle (4) und Turboladereinheit (7) bei unveränderter Relativposition dieser Baugruppen untereinander um die Vertikalachse um 180° drehbar ist.

7. Schiffsbrennkraftmaschine nach Anspruch 5 oder 6, **dadurch gekennzeichnet, dass** die versetzt zur Kurbelwelle (4) am Kurbelgehäuse (3) verbaute Ölpumpe (14) und Kühlmittelpumpe (16, 17) über einen versetzt zur Kurbelwelle (4) am Kurbelgehäuse (3) verbauten Zahnradantrieb (18) ausgehend von einem Steuerantrieb oder ausgehend von der Kurbelwelle antreibbar sind.

8. Schiffsbrennkraftmaschine nach einem der Ansprüche 1 bis 7, **gekennzeichnet durch** eine Kraftstoffzuführung (12) die versetzt zur Kurbelwelle (4) am Kurbelgehäuse (3) verbaut ist und zusammen mit der Gesamtheit aus Kurbelgehäuse (3), Kurbelwelle (4) und Turboladereinheit (7) bei unveränderter Relativposition dieser Baugruppen untereinander um die Vertikalachse um 180° drehbar ist.

## Claims

1. A marine diesel internal combustion engine (1),
having a crankcase (3),
having a crankshaft (4) mounted in the crankcase (3), having a crankshaft vibration damper (5) coupled to the crankshaft (4),
having an output-side flywheel (6) coupled to the crankshaft (4),
having a turbocharger unit (7), which is arranged on a side (3a) of the crankcase (3) extending transversely to the crankshaft (4) above the crankcase (3), wherein the turbocharger unit (7) comprises an exhaust gas outlet (11),
**characterized in that**
the crankshaft (4), on the first side (3a) of the crankcase (3), on which the turbocharger unit (7) is positioned, projects with a first section (4a) and on a second side (3b) of the crankcase (3) located opposite the first side (3a) and thus the turbocharger unit (7), extending transversely to the crankshaft (4), with a second section (4b), out of the crankcase (3),
for adapting the position of the exhaust gas outlet (11), the entirety of the assemblies crankcase (3), crankshaft (4) and turbocharger unit (7), with unchanged relative position of these assemblies to one another, is rotatable about a vertical axis by 180°, wherein dependent thereon the crankshaft vibration damper (5) is connected to the first section (4a) of the crankshaft (4) and the flywheel (6) to the second section (4b) of the crankshaft (4) or alternatively the crankshaft vibration damper (5) to the second section (4b) of the crankshaft and the flywheel (6) to the first section (4a) of the crankshaft (4).

2. The marine diesel internal combustion engine according to Claim 1, **characterized in that** in particular when the exhaust gas outlet (11) of the turbocharger unit (7) is to be arranged on an output side, the entirety of the assemblies crankcase (3), crankshaft (4) and turbocharger unit (7) is turned in such a manner that the turbocharger unit (7) is positioned on the output side, wherein the crankshaft vibration damper (5) is then connected to the second section (4b) of the crankshaft and the flywheel (6) to the first section (4a) of the crankshaft.

3. The marine diesel internal combustion engine according to Claim 1 or 2, **characterized in that** in particular when the exhaust outlet (11) is to be arranged on a side located opposite the output side, the entirety of the assemblies crankcase (3), crankshaft (4) and turbocharger unit (7) is turned in such a manner that the turbocharger unit (7) is positioned located opposite the output side, wherein the crankshaft vibration damper (5) is then connected to the first section (4a) of the crankshaft and the flywheel (6) to the second section (4b) of the crankshaft.

4. The marine diesel internal combustion engine according to any one of the Claims 1 to 3, **characterized by** a hood (13) for the crankshaft vibration damper (5), which in particular when the exhaust gas outlet (11) is to be arranged on the output side, covers the crankshaft vibration damper (5) on the second side (3b) of the crankcase (3) and conducts oil on the second side (3b) of the crankcase into an oil pan (8), and which in particular when the exhaust gas outlet (11) is to be arranged located opposite the output side, covers the crankshaft vibration damper (5) on the first side (3a) and conducts oil on the first side (3a) of the crankcase into an oil pan (8).

5. The marine diesel internal combustion engine according to any one of the Claims 1 to 4, **characterized by** an oil pump (14) and a coolant pump (16, 17), which are mounted on the crankcase (3) offset relative to the crankshaft (4) and together with the entirety of crankcase (3), crankshaft (4) and turbocharger unit (7) with unchanged relative position of these assemblies relative to one another is rotatable about the vertical axis by 180°.

6. The marine diesel internal combustion engine according to Claim 5, **characterized by** an oil cooler (15), which is likewise mounted on the crankcase (3) offset relative to the crankshaft (4) and likewise is rotatable together with the entirety of crankcase (3), crankshaft (4) and turbocharger unit (7) with unchanged relative position of these assemblies relative to one another about the vertical axis by 180°.

7. The marine diesel internal combustion engine according to Claim 5 or 6, **characterized in that** the oil pump (14) and coolant pump (16, 17) mounted on the crankcase (3) offset relative to the crankshaft (4) are driveable by way of a gear drive (18) mounted on the crankcase (3) offset relative to the crankshaft (4) emanating from a control drive or emanating from the crankshaft.

8. The marine diesel internal combustion engine according to any one of the Claims 1 to 7, **characterized by** a fuel feed (12) which is mounted on the crankcase (3) offset relative to the crankshaft (4) and together with the entirety of crankcase (3), crankshaft (4) and turbocharger unit (7) is rotatable with unchanged relative position of these assemblies relative to one another about the vertical axis by 180°.

## Revendications

1. Moteur à combustion interne de navire (1), comportant un carter (3),
comportant un vilebrequin (4) monté dans le carter (3),
comportant un amortisseur de vibrations de vilebrequin (5) couplé au vilebrequin (4),
comportant un volant (6) du côté de sortie couplé au vilebrequin (4),
comportant une unité de turbocompresseur (7), qui est disposée sur un côté (3a) s'étendant transversalement au vilebrequin (4) du carter (3) au-dessus du carter (3), dans lequel l'unité de turbocompresseur (7) présente une sortie de gaz d'échappement (11), **caractérisé en ce que**
le vilebrequin (4) sur le premier côté (3a) du carter (3), sur lequel l'unité de turbocompresseur (7) est positionnée, dépasse par une première section (4a) et sur l'un des premiers côtés (3a) et donc le deuxième côté (3b) opposé à l'unité de turbocompresseur (7) s'étendant transversalement au vilebrequin (4) du carter (3) opposé à l'unité de turbocompresseur par une deuxième section (4b) hors du carter (3),
pour adapter la position de la sortie des gaz d'échappement (11) la totalité de l'ensemble de carter (3), vilebrequin (4) et unité de turbocompresseur (7) avec la position relative inchangée de ces ensembles peut être tournée de 180° l'un par rapport à l'autre autour d'un axe vertical, dans lequel en fonction de cela l'amortisseur de vibrations du vilebrequin (5) sur la première section (4a) du vilebrequin (4) et le volant (6) sur la deuxième section (4b) du vilebrequin (4) ou en variante l'amortisseur de vibrations du vilebrequin (5) est raccordé à la deuxième section (4b) du vilebrequin et le volant (6) à la première section (4a) du vilebrequin (4).

2. Moteur à combustion interne de navire selon la revendication 1, **caractérisé en ce que** lorsque la sortie des gaz d'échappement (11) de l'unité de turbocompresseur (7) doit être disposée sur un côté de sortie, la totalité de l'ensemble de carter (3), vilebrequin (4) et unité de turbocompresseur (7) est tournée de sorte que l'unité de turbocompresseur (7) soit positionnée du côté de sortie, dans lequel l'amortisseur de vibrations du vilebrequin (5) est alors relié à la deuxième section (4b) du vilebrequin et le volant (6) à la première section (4a) du vilebrequin.

3. Moteur à combustion interne de navire selon la revendication 1 ou 2, **caractérisé en ce que** lorsque la sortie des gaz d'échappement (11) doit être disposée d'un côté opposé au côté de sortie, la totalité de l'ensemble de carter (3), vilebrequin (4) et unité de turbocompresseur (7) est tournée de telle sorte que l'unité de turbocompresseur (7) opposée au côté de sortie soit positionnée à l'opposé du côté de sortie, dans lequel l'amortisseur de vibrations du vilebrequin (5) est alors relié à la première section (4a) du vilebrequin et le volant (6) à la deuxième section (4b) du vilebrequin.

4. Moteur à combustion interne de navire selon une des revendications 1 à 3, **caractérisé par** un capot (13) pour l'amortisseur de vibrations du vilebrequin (5), qui lorsque la sortie des gaz d'échappement (11) doit être disposée du côté de sortie, recouvre l'amortisseur de vibrations du vilebrequin (5) du deuxième côté (3b) du carter (3) et guide l'huile sur le deuxième côté (3b) du carter dans un carter d'huile (8), et lorsque la sortie des gaz d'échappement (11) doit être positionnée à l'opposé du côté de sortie, recouvre l'amortisseur de vibrations du vilebrequin (5) sur le premier côté (3a) du carter et guide l'huile du premier côté (3a) du carter dans un carter d'huile (8).

5. Moteur à combustion interne de navire selon une des revendications 1 à 4, **caractérisé par** une pompe à huile (14) et une pompe à liquide de refroidissement (16, 17) qui sont installées en décalage par rapport au vilebrequin (4) sur le carter (3) et conjointement à la totalité de l'ensemble de carter (3), vilebrequin (4) et unité de turbocompresseur (7) avec la position relative de ces ensembles inchangée peuvent être tournés de 180° l'un par rapport à l'autre autour d'un axe vertical.

6. Moteur à combustion interne de navire selon la revendication 5, **caractérisé par** un refroidisseur d'huile (15), qui est également installé en décalage par rapport au vilebrequin (4) sur le carter (3) et peut également être tourné de 180° autour de l'axe vertical avec la totalité de l'ensemble de carter (3), vilebrequin (4) et unité de turbocompresseur (7) avec la position relative de ces ensembles inchangée.

7. Moteur à combustion interne de navire selon la revendication 5 ou 6, **caractérisé en ce que** la pompe à huile (14) et la pompe à liquide de refroidissement (16, 17) installées en décalage par rapport au vilebrequin (4) sur le carter (3) peuvent être entraînées par l'intermédiaire d'un entraînement à engrenage intégré (18) en décalage par rapport au vilebrequin (4) sur le carter (3) à partir d'un entraînement de commande ou à partir du vilebrequin.

8. Moteur à combustion interne de navire selon une des revendications 1 à 7, **caractérisé par** une alimentation en carburant (12) qui est installée en décalage par rapport au vilebrequin (4) sur le carter (3) et conjointement à la totalité de l'ensemble de carter (3), vilebrequin (4) et unité de turbocompresseur (7) avec la position relative de ces ensembles inchangée peut être tournée de 180° l'un par rapport à l'autre autour de l'axe vertical.
